# EUROPEAN PATENT SPECIFICATION

(11) **EP 0 947 232 B1**
(45) Date of publication and mention of the grant of the patent: **04.05.2005**
(21) Application number: 98830761.7
(22) Date of filing: 17.12.1998
(51) Int. Cl.: B01D 46/24, B01D 53/26, F04C 29/02

(54) **Oil removing filter with associated pressure valve for compressed air supply systems**
Filter mit Druckventil zum Abscheiden von Öl aus Luft für Druckluftbeschaffungsanlagen
Filtre à soupape de pression pour séparer l'huile de l'air dans une installation de production d'air comprimé

(30) Priority: 19.12.1997 IT BO970725
(43) Date of publication of application: 06.10.1999
(73) Proprietor: Perazzo, Chiara, 40135 Bologna (IT)
(72) Inventor: Perazzo, Chiara, 40135 Bologna (IT)
(74) Representative: Lanzoni, Luciano

(56) References cited:
- EP-A- 0 121 999
- EP-A- 0 277 583
- WO-A-93/08404
- GB-A- 2 097 861
- US-A- 3 357 162
- US-A- 5 533 873

## Description

The present invention relates to an oil removing filter with associated minimum pressure valve for compressed air supply systems.

In accordance with the prior art, compressed air supply system comprising compressors of any kind (rotating with screws, blades, etc.) produce a flow of air at greater than atmospheric pressure, whereto are mixed more or less sizeable traces of oil. Such oil comes from the compressors themselves, and it is present therein to lubricate their moving parts set in mutual contact.

Before the compressed air supplied by the compressors can be used, it is necessary to remove the oil present therein, and this task is usually carried out by filters constructed in various manners, normally associated to a minimum pressure valve able to allow the exit of the compressed air from the filters themselves only when the air presents a given pressure.

A first kind of commonly used filter comprises a chamber of considerable dimensions, provided with an inlet and an outlet. Within this chamber are located some filtering cartridges set mutually side by side, which are traversed by the flow of air coming from the inlet and remove the oil therein before the air itself reaches the outlet after travelling through a minimum pressure valve located outside the chamber itself.

When the aforementioned filters are excessively dirty with oil, they are extracted from the chamber to be cleaned with relatively long and laborious operations.

Another type of commonly used filter comprises a chamber provided with an inlet and an outlet. Within that chamber is positioned a filtering cartridge, which is traversed by the flow of air coming from the inlet and cleanses it of oil before the air itself reaches the outlet after travelling through a minimum pressure valve positioned outside the chamber itself.

When filters of this type are excessively dirty with oil, they are destined to disposal as waste, giving rise to considerable recycling problems due to the fact that the aforementioned chamber and the related filter are constructed with different materials.

The very fact that such filters are disposable", moreover, constitutes in itself a reason for poor cost effectiveness of the filters itself.

The object of the present invention therefore is to eliminate the aforementioned drawbacks.

From EP277583 an oil separator horizzontally arranged is known, comprising an hollow cup-shaped cylindrical body and an internal cylindrical filter which divides an internal air chamber of the separator from an external chamber which collects the separated oil. The free open end of the separator body is sealingly closed by a lid through which it communicates with a compressed air inlet port while its closed end communicates with a compressed air exit port through a minimum-pressure and non-return valve.

From WO9308404 it is also known a filter configuration for compressors including a support member, a cup-shaped wall secured to said support member defining an internal substantially enclosed space, a filter element located within said enclosed space and sealingly engaged at one axial end with said support member. Preferably releasable connection means is provided between said outer wall and said support member to enable access to the filter means for servicing as may be required.

A minimum pressure valve is also provided in said support member controlling flow through a discharge passage.

The invention, as it is characterised by the claims, solves the problem of providing an oil removing filter for compressed air supply systems, characterised in that it comprises a box body defined by a tubular element connected in a sealed and removable manner, in correspondence with its axial end portions, to a lid and to a base wall; within said box body being coaxially housed a filtering cartridge of substantially cylindrical hollow shape, with one of its axial edges bordering in a substantially sealed manner said base wall, and with another axial edge bordering in a substantially sealed manner a surface of said lid; said lid being provided with an inlet for compressed air coming from a compressor, communicating with an inner area of said box body bordering a radially external surface of said filtering cartridge, and being moreover provided with an outlet for compressed air, communicating with an internal cavity of said filtering cartridge and communicating, with the interposition of a minimum pressure valve associated with the lid itself, with a unit using the compressed air itself; said base wall being provided with a hole for the outflow of the oil from the filter.

The technical features of the invention, according to the aforesaid aims, can be clearly observed from the content of the claims that follow, and its advantages shall become more readily apparent in the detailed description that follows, made with reference to the accompanying drawings, which show an embodiment provided purely by way of non limiting example, wherein:
- Figure 1 shows a section view of an oil removing filter according to the present invention;

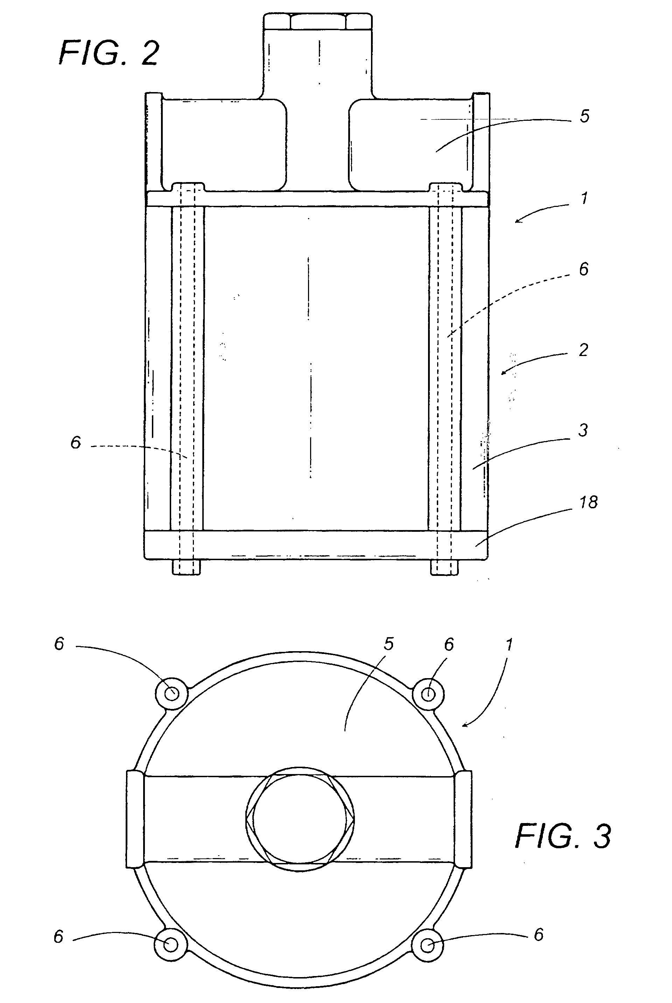

- Figure 2 shows a side view of the oil removing filter as per Figure 1;
- Figure 3 shows a plan view of the oil removing filter of the previous figures.

In accordance with the accompanying figures, the number 1 indicates in its entirety an oil removing filter, which comprises a box body 2 with substantially cylindrical hollow shape. Said box body 2 comprises a tubular element 3 presenting an inner cavity 4 closed at the top by a removable lid 5 and at the bottom by a removable base wall 18; the lid 5 and the wall 18 are connected to the tubular element 3 by means of four screws 6, which hold the lid 5 and the wall 18 themselves in contact with the axial end edges of the tubular element 3 itself with the interposition of gasket elements not shown here.

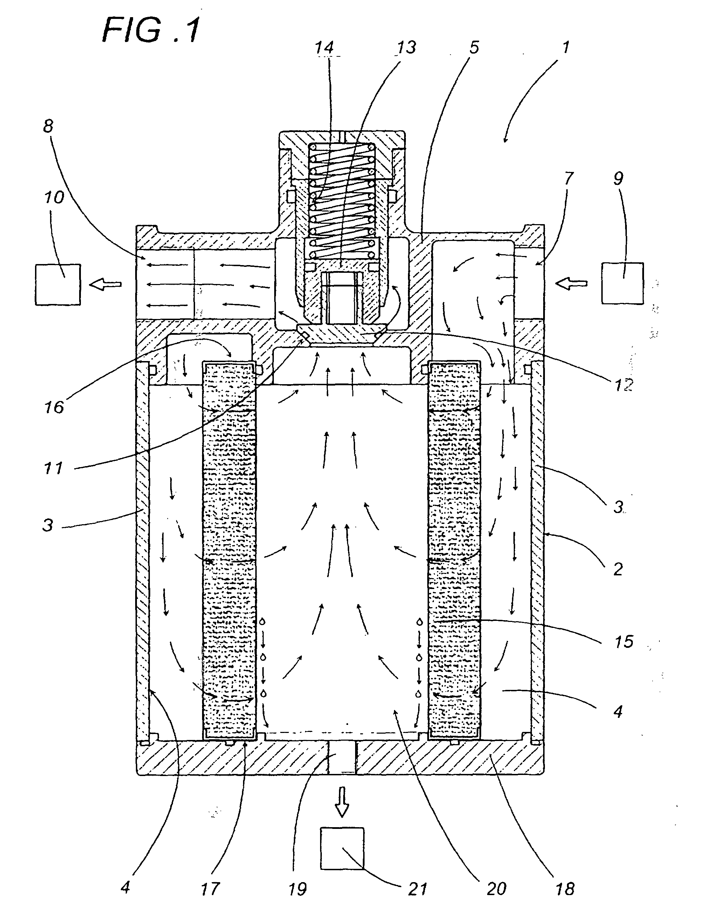

The lid 5 presents two side openings 7 and 8, positioned respectively to the right and to the left in Figure 1 and able, respectively, to allow the entrance within the box body 2 of a flow of air mixed with oil particles coming from a compressor shown schematically with a block 9, and to allow the exit of the air cleansed of the oil from the box body 2 itself and its delivery towards a using unit shown schematically with a block 10.

The inlet 7 communicates with a radially peripheral portion of the cavity 4, whereas the outlet 8 communicates with a top central portion of the cavity 4 itself through an opening 11 obtained in the lid 5 and connected to a shutter element 12 of a minimum pressure valve 13, known in itself, housed within a cavity 14 obtained in a top portion of the lid 5 itself.

Within the box body 2 is coaxially housed a filtering cartridge 15, which comprises, in a way known in itself, an element having substantially the shape of a hollow cylinder, made of filtering material and able to capture the oil particles present in the air coming from the opening 7. A top annular edge 16 of the filtering cartridge 15 borders in a substantially sealed manner with a surface of the lid 5 internal to the box body 2, whilst a lower annular edge 17 of the filtering cartridge 15 borders in a substantially sealed manner with the top surface of the base wall 18 of the box body 2 itself. A central portion of said base wall 18 is provided with a through hole 19, communicating on one side with an internal cavity 20 of the filtering cartridge 15 and on the other side with a unit, shown schematically with a block 21, for resupplying the oil coming from the cavity 4 of the filter 1 to said compressor 9.

In use, air mixed with oil particles coming from the compressor 9 is injected into the box body 4 through the opening 7, and travels through the lateral surface of the filtering cartridge 15 flowing into the cavity 20 of the filtering cartridge 15 itself.

When pressure within the cavity 20 reaches a set value, the shutter element 12 of the valve 13 puts the cavity itself in communication with the opening 8, through which the air cleansed of oil can reach the using unit 10.

The oil captured by the filtering cartridge 15 progressively exits from the box body 2 through the hole 19, reaching the unit 21 which sends it back to the compressor 9.

For the replacement or cleaning of the filtering cartridge 15, when it is excessively dirty, it is sufficient to remove the screws 6 and momentarily separate the wall 18 from the tubular element 3.

Note that the filter 1, as a consequence of its described features, provides for extremely quick and easy maintenance, and it is not of the "disposable" kind as are many prior art air filters. As a consequence thereof, with a compact and functional construction, it has been found possible to make the minimum pressure valve 13 an integral part of the filter 1 itself.

Note also that the manufacture of the filter 1 is particularly economical, thanks to that fact that the box body 2 is realised in the manner described, i.e comprising the tubular element 3 (of extremely reduced cost), and two simple closure elements of the tubular element 3 constituted, as stated, by the lid 5 and by the base wall 18.

## Claims

1. Oil removing filter for compressed air supply systems, comprising a box body (2) defined by a tubular element (3) connected in a sealed and removable manner, in correspondence with an axial end portion, to a lid (5); within said box body (2) being coaxially housed a filtering cartridge (15) of substantially cylindrical hollow shape, with one of its axial edges (16) bordering in a substantially sealed manner a surface of said lid (5); said lid (5) being provided with an inlet (7) for the compressed air coming from a compressor (9), communicating with an internal area of said box body (2) and being moreover provided with an outlet (8) for the compressed air, communicating with a cavity (20) of said filtering cartridge (15),
**characterised in that** said internal area of body (2) is bordering a radially external surface of said filtering cartridge (15) and said cavity (20) is an internal cavity of cartridge (15), wherein said tubular element (3) in correspondence with a further axial end portion is connected in a sealed and removable manner with a base wall (18), and said filtering cartridge (15) is bordering in a substantially sealed manner said base wall (18) with a further axial edge (17), base wall (18) being provided with a hole (19) for the outflow of the oil from the filter (1), the filter being further **characterised in that** said cavity (20) of the filtering cartridge (15) communicates, with the interposition of a minimum pressure valve (13) associated with the lid (5), with a unit (10) using the compressed air.

2. Oil removing filter according to claim 1, **characterised in that** said minimum pressure valve (13) is housed within a cavity (14) of said lid (5).

3. Oil removing filter according to claim 1 or 2, **characterised in that** said hole (19) is obtained in said base wall (18), and it presents an end communicating with said internal cavity (20) of said filtering cartridge (15).

4. Oil removing filter according to claim 1 or 2, **characterised in that** one end of said hole (19) communicates with a unit (21) for resupplying the oil contained in said box body (2) to said compressor (9).

## Patentansprüche

1. Ölabscheidefilter für Druckluftversorgungsanlagen, enthaltend einen kastenförmigen Körper (2), beschrieben durch ein rohrförmiges Element (3), das auf eine abgedichtete und lösbare Weise mit einem axialen Endabschnitt an einen Deckel (5) angeschlossen ist; wobei im Inneren des genannten kastenförmigen Körpers (2) koaxial eine Filterkartusche (15) von einer im wesentlichen hohlen zylindrischen Form angeordnet ist, und zwar mit einem ihrer axialen Ränder (16) in einer im wesentlichen abdichtenden Weise eine Fläche des genannten Deckels (5) umgebend; wobei der genannte Deckel (5) mit einem Einlass (7) für die aus einem Kompressor (9) kommende Druckluft versehen ist, der mit einem Innenbereich des genannten kastenförmigen Körpers (2) in Verbindung steht, und er ausserdem mit einem Auslass (8) für die Druckluft versehen ist, der mit einem Hohlraum (20) der genannten Filterkartusche (15) in Verbindung steht, **dadurch gekennzeichnet, dass** der genannte Innenbereich des Körpers (2) eine radiale äussere Oberfläche der genannten Filterkartusche (15) umgibt und der genannte Hohlraum (20) ein innerer Hohlraum der Kartusche (15) ist, wobei das genannte rohrförmige Element (3) mit einem weiteren axialen Endabschnitt auf eine abgedichtete und lösbare Weise an eine Bodenwand (18) angeschlossen ist und die genannte Filterkartusche (15) auf eine im wesentlichen abdichtende Weise mit einem weiteren axialen Rand (17) die genannte Bodenwand (18) umgibt, wobei die Bodenwand (18) mit einer Bohrung (19) zum Abfliessen des Öls aus dem Filter (1) versehen ist, und wobei der Filter ausserdem **dadurch gekennzeichnet ist, dass** der genannte Hohlraum (20) der Filterkartusche (15) unter Zwischensetzen eines dem Deckel (5) zugeordneten Minderdruckventils (13) mit einer Druckluftverbrauchereinheit (10) in Verbindung steht.

2. Ölabscheidefilter nach Patentanspruch 1, **dadurch gekennzeichnet, dass** das genannte Minderdruckventil (13) im Inneren eines Hohlraumes (14) des genannten Deckels (5) angeordnet ist.

3. Ölabscheidefilter nach Patentanspruch 1 oder 2, **dadurch gekennzeichnet, dass** die genannte Bohrung (19) in die genannte Bodenwand (18) eingearbeitet ist und eine Endverbindung mit dem genannten internen Hohlraum (20) der genannten Filterkartusche (15) darstellt.

4. Ölabscheidefilter nach Patentanspruch 1 oder 2, **dadurch gekennzeichnet, dass** ein Ende der genannten Bohrung (19) an eine Einheit (21) zum Wiedereinspeisen des in dem genannten kastenförmigen Körper (2) enthaltenen Öls in den genannten Kompressor (9) angeschlossen ist.

## Revendications

1. Un filtre séparateur d'huile pour des installations de production d'air comprimé, comprenant un corps (2) en forme de boîtier défini par un élément tubulaire (3) raccordé de façon étanche et amovible, au niveau d'une portion d'extrémité axiale, à un couvercle (5) ; à l'intérieur dudit corps (2) en forme de boîtier étant coaxialement logée une cartouche filtrante (15) ayant une forme essentiellement cylindrique et creuse, dont un (16) de ses bords axiaux borde de façon essentiellement étanche une surface dudit couvercle (5) ; ledit couvercle (5) étant pourvu d'une entrée (7) pour l'air comprimé provenant d'un compresseur (9), communiquant avec une zone intérieure dudit corps (2) en forme de boîtier, et étant en outre pourvu d'une sortie (8) pour l'air comprimé, communiquant avec une cavité (20) de ladite cartouche filtrante (15),
ledit filtre séparateur d'huile étant **caractérisé en ce que** ladite zone intérieure du corps (2) borde une surface radialement externe de ladite cartouche filtrante (15) et ladite cavité (20) est une cavité intérieure de la cartouche (15), où ledit élément tubulaire (3) est raccordé, au niveau d'une autre portion d'extrémité axiale et de façon étanche et amovible, à une paroi de fond (18), et ladite cartouche filtrante (15) borde de façon essentiellement étanche ladite paroi de fond (18) avec un autre bord axial (17), la paroi de fond (18) étant pourvue d'un orifice (19) pour l'écoulement de l'huile du filtre (1), le filtre étant également **caractérisé en ce que** ladite cavité (20) de la cartouche filtrante (15) communique, avec l'interposition d'une soupape de pression minimum (13) associée au couvercle (5), avec une unité (10) utilisant l'air comprimé.

2. Le filtre séparateur d'huile selon la revendication 1, **caractérisé en ce que** ladite soupape de pression minimum (13) est logée à l'intérieur d'une cavité (14) dudit couvercle (5).

3. Le filtre séparateur d'huile selon la revendication 1 ou 2, **caractérisé en ce que** ledit orifice (19) est réalisé dans ladite paroi de fond (18) et présente une extrémité communiquant avec ladite cavité intérieure (20) de ladite cartouche filtrante (15).

4. Le filtre séparateur d'huile selon la revendication 1 ou 2, **caractérisé en ce qu'**une extrémité dudit orifice (19) communique avec une unité (21) destinée à ré-alimenter l'huile contenue dans ledit corps (2) en forme de boîtier audit compresseur (9).
